# EUROPEAN PATENT APPLICATION

(11) **EP 3 907 067 A1**
(43) Date of publication of application: **10.11.2021**
(21) Application number: 20714275.3
(22) Date of filing: 21.02.2020
(51) Int. Cl.: B32B 1/08, B32B 7/04, B32B 7/10, B32B 27/08, B32B 27/30, B32B 27/34, B32B 27/40

(54) **MULTI-LAYER AUTOMOTIVE TUBE**

(30) Priority: 27.02.2019 BR 102019004099
(71) Applicant: Sumitomo Riko Company Limited, Komaki-shi, Aichi 485-8550 (JP)
(72) Inventor: ABREU MEDEIROS, Breno, 35675-000 Juatuba (BR)
(74) Representative: Becker, Eberhard
(86) International application number: PCT/IB2020/051468
(87) International publication number: WO 2020/174335

(57) **Abstract**

The present invention introduces a multi-layer automotive tube (1), said layers comprising an inner layer (2) made of thermoplastic polyurethane (TPU); a first intermediate layer (3) made of ethylene vinyl alcohol (EVOH); a second intermediate layer (4) made of polyamide and an external layer (5) made of polyamide. The inner layer (2) made of TPU provides excellent chemical stability and is significantly less susceptible to degradation caused by frequent contact with fuels and/or fuel vapours. Said automotive tube (1) can be produced using methods widely known in the prior art, such that industrial lines for producing said automotive tube (1) can be adapted without great difficulty.

## Description

### FIELD OF THE INVENTION

The present invention is contained in the field of application of automotive pipelines.

More particularly, the present invention relates to multi-layer automotive tubes, intended primarily for the transport of fuels or fuel vapors in the systems for feeding the internal combustion engine.

### BACKGROUND OF THE INVENTION

The automotive industry has known for many years solutions for transporting fuel to the engine using multi-layer pipes, tubes or hoses, which comprise a wide variety of plastic materials such as polyolefins, polyamides, fluoropolymers, rubber, elastomers thermoplastics, among others. In many respects, plastic materials have advantages over metallic materials, such as lower weight and ease of manufacture. Consequently, plastic materials are widely used options in components of automotive fuel systems.

In general, these pipes must meet a number of requirements for application in automotive systems. For example, they must have satisfactory mechanical properties as they are exposed to contact with fuels, fuel vapors and oils, often at high temperatures. Other highly desired mechanical properties are impact strength, fatigue strength and flexibility.

Further, such automotive pipelines must have good hydrocarbon barrier properties, i.e., low permeability, to prevent the vapors of fuel passing therethrough are emitted into the atmosphere.

However, the prior art shows drawbacks not yet fully overcome. In particular, the inner layer of known automotive pipelines are continuously degraded in contact with fuels, releasing oligomers which may contaminate it or, together with the impurities present in the fuels, can clog or damage elements of the engine feed system. As an example, we can mention the clogging of injection nozzles, a circumstance detrimental to the performance of the engine and absolutely inconvenient for the owner of the vehicle.

Patent document PI0504589-4 introduces a multi-layer tube comprising, from the inside to the outside, an inner layer of polyolefin; a first intermediate layer based on adhesive; a second intermediate layer in ethylene vinyl alcohol (EVOH) barrier to permeability; a third layer of polyamide to make the adhesion between the second layer and the outer protective layer. Disadvantageously, said pipe requires an adhesive-based layer and has no solutions to sufficiently raise the chemical stability of the pipe. Consequently, automotive systems are still subject to contamination by withdrawable compounds.

Thus, it is evident that there is a strong demand for the development of multi-layer automotive pipelines with excellent mechanical properties and excellent chemical stability, poorly susceptible to degradation by contact with fuels or fuel vapors. In particular, said automotive pipelines would be particularly advantageous if they are inexpensive and obtained by processes already diffused by the state of the art.

### OBJECTIVES OF THE INVENTION

The present invention aims to introduce an innovative multi-layer automotive tube with excellent mechanical properties and excellent chemical stability, being appreciably less susceptible to degradation by contact with fuels or their vapors than prior art articles.

Another objective of the present invention is to introduce a multi-layered automotive tube which contributes to the extended life of engine feed systems and which reduces fuel contamination by oligomers.

Finally, another objective of the present invention is to provide a multi-layer automotive tube capable of being manufactured by processes already well-known in the art.

### BRIEF DESCRIPTION OF THE INVENTION

The objects of the present invention are achieved by the introduction of a multi-layer automotive tube, comprising from the inside to the outside:
- an inner layer of thermoplastic polyurethane (TPU);
- a first intermediate layer of ethylene vinyl alcohol (EVOH);
- a second intermediate layer of polyamide and;
- an outer layer of polyamide.

The objects of the present invention are also achieved by the introduction of an automotive tube comprising an inner layer of TPU of excellent chemical stability, which is significantly less susceptible to degradation caused by frequent contact with fuels and/or their vapors.

Finally, the objects of the present invention are achieved by the introduction of an automotive tube having excellent mechanical properties, low cost and which can be manufactured from conventional manufacturing processes widely known in the art.

### BRIEF DESCRIPTION OF THE DRAWINGS

The subject matter of this invention will become fully clear in its technical aspects from the detailed description which will be made on the basis of the following figure, in which:

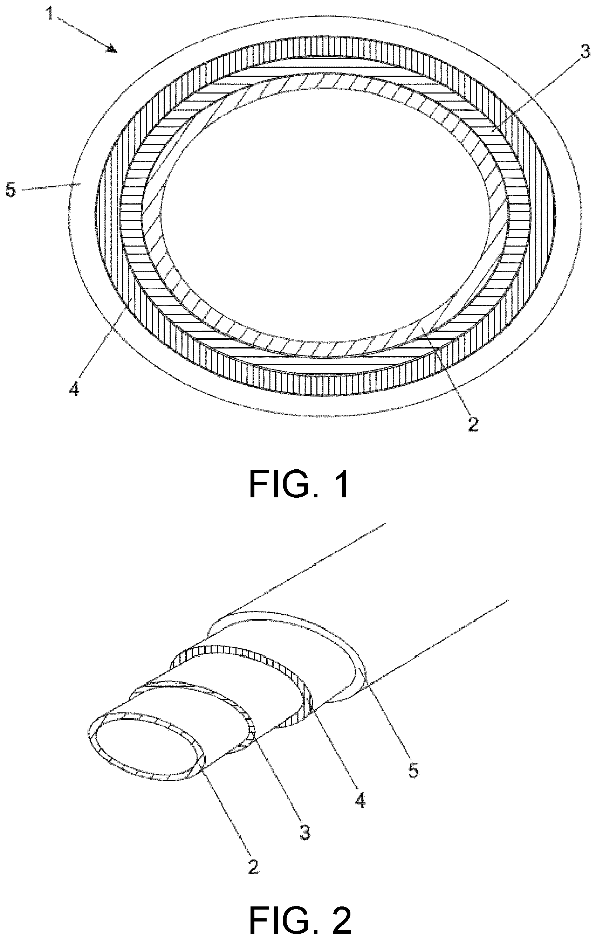

Figure 1 shows a front cross-sectional view of the automotive tube object of the present invention;
Figure 2 shows a perspective cross-sectional view of the automotive tube object of the present invention;

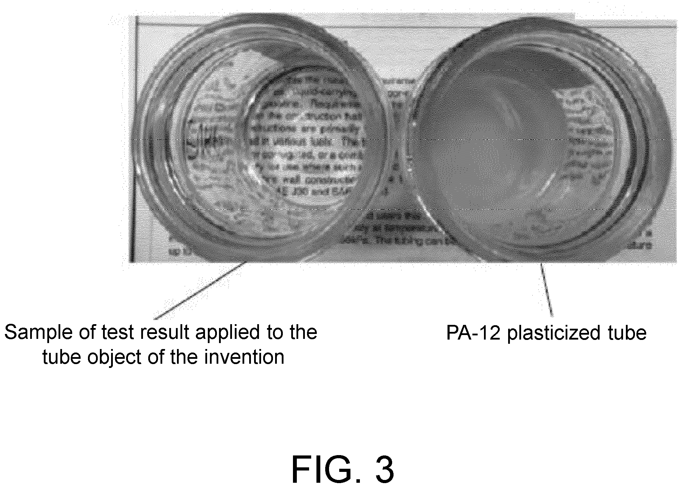

Figure 3 shows the result of a test performed using the automotive tube of the present invention and a PA-12 plasticized tube.

### DETAILED DESCRIPTION OF THE INVENTION

In accordance with the above-illustrated figures, the present application has in its preferred embodiment a multi-layer automotive tube (1) comprising from the inside towards the outside:
- an inner layer (2) of thermoplastic polyurethane (TPU);
- a first intermediate layer (3) of ethylene vinyl alcohol (EVOH);
- a second intermediate layer (4) of polyamide;
- an outer layer (5) of polyamide.

The inner layer (2) of TPU has the following physical properties:
- density between 1.1 and 1.3 g/cm³, calculated by ISO 2781 test method;
- tear strength greater than 135 kN/m, calculated by ISO 34-1B test method;
- tensile strength between 30 and 40 MPa, calculated by ISO 527-2/5A/500 test method;
- abrasion resistance between 25 and 32 mm³, calculated by ISO 4649-A test method;
- Shore A hardness greater than 90, calculated by ISO 868 test method.

The first intermediate layer (3) is composed of EVOH, material which has excellent barrier properties, preventing vaporized hydrocarbons from passing through the tubular walls and being emitted into the environment. Advantageously, EVOH is a lightweight material, which reduces the overall weight of the tubing.

The second intermediate layer 4 may be composed of PA612, which has, among other properties, excellent structural strength, excellent thermal resistance, low moisture absorption and high dimensional stability.

Alternatively, the second intermediate layer 4 may be manufactured from polyamides selected from a group comprising PA6, PA66, PA11, PA12 and combinations thereof.

The outer layer 5 may be composed of PA 12 and may be fabricated with PA 612 also, which exhibits, among other properties, low moisture absorption, excellent mechanical and chemical properties, excellent thermal resistance and high resistance to abrasion.

Alternatively, the outer layer 5 may be fabricated from polyamides selected from a group comprising PA6.12, PA6.10, PA10.10 and combinations thereof.

The automotive tube (1) object of the present invention may be smooth or corrugated.

The multi-layer automotive tube (1) may be manufactured from a process selected from a group which comprises coextrusion, molding the tube through internal or external steam. Said processes are widely known in the art, so that the adaptation of industrial lines for the manufacture of the present automotive tube (1) can be performed without major difficulties.

The multi-layer automotive tube (1) may have an internal diameter in the range of 5 to 10 mm, an outside diameter in the range of 7 to 12 mm and a thickness in the range of 0.5 to 3 mm.

Advantageously, the present invention does not require the use of adhesive layers disposed between layers of materials, as they have excellent adhesion to each other.

Another advantage of the present invention is that the inner layer of TPU exhibits excellent chemical stability, being significantly less susceptible to degradation caused by contact with fuels and/or their vapors.

It is to be understood that the present disclosure does not limit application to the details described herein and that the invention is capable of other embodiments and to be practiced or performed in a variety of ways within the scope of the claims. Although specific terms have been used, such terms should be interpreted in a generic and descriptive sense, and not for purposes of limitation.

## Claims

1. A multi-layer automotive tube, **characterized in that** comprising an inner layer (2) of thermoplastic polyurethane (TPU) from the inside to the outside; a first intermediate layer (3) of ethylene vinyl alcohol (EVOH); a second intermediate layer (4) of polyamide and; an outer layer (5) of polyamide.

2. The tube according to claim 1, **characterized in that** the inner layer (2) of TPU has a density between 1.1 and 1.3 g/cm³, calculated by the test method ISO 2781; a tensile strength greater than 135 kN/m, calculated by ISO 34-1B test method; a tensile strength between 30 and 40 MPa, calculated by ISO 527-2/5A/500 test method; an abrasion resistance between 25 and 32 mm³, calculated by ISO 4649-A test method and a Shore A hardness of more than 90, calculated by ISO 868 test method.

3. The tube according to claim 1, **characterized in that** the second intermediate layer (4) is manufactured from polyamides selected from the group comprising PA6, PA66, PA11, PA12, PA612 and combinations thereof.

4. The tube according to claim 1, **characterized in that** the outer layer (5) is manufactured from polyamides selected from the group comprising PA6.12, PA6.10, PA10.10, P12 and combinations thereof.

5. The tube according to claim 1, **characterized in that** the tube is smooth or corrugated.

6. The tube according to claim 1, **characterized in that** the tube is manufactured from a process selected from a group comprising coextrusion, injection molding and extrusion blow molding.

7. The tube according to claim 1, **characterized in that** the tube has an inner diameter in the range of 5 to 10 mm, an outer diameter in the range of 7 to 12 mm and a thickness in the range of 0.5 to 3 mm.
